# EUROPÄISCHE PATENTSCHRIFT

(11) **EP 0 579 070 B1**
(45) Veröffentlichungstag und Bekanntmachung des Hinweises auf die Patenterteilung: **02.10.1996**
(21) Anmeldenummer: 93110673.6
(22) Anmeldetag: 05.07.1993
(51) Int. Cl.: E04F 11/18, F16B 7/04

(54) **Verbindungselement für Rohre**
Assembly element for tubes
Elément d'assemblage pour tubes

(30) Priorität: 17.07.1992 DE 4223429
(43) Veröffentlichungstag der Anmeldung: 19.01.1994
(73) Patentinhaber: SKS STAKUSIT KUNSTSTOFF GmbH + Co. KG, D-64331 Weiterstadt (DE)
(72) Erfinder: Fuchs, Klaus, D-64372 Ober-Ramstadt (DE)
(74) Vertreter: Weber, Dieter, Dr.

(56) Entgegenhaltungen:
- EP-A- 0 166 982
- DE-A- 2 633 147
- DE-A- 3 641 693
- DE-U- 8 703 940
- DE-U- 9 102 252
- DE-U- 9 202 724
- US-A- 1 467 153

## Beschreibung

Die vorliegende Erfindung betrifft ein Verbindungselement für Rohre, insbesondere für Handläufe an Balkon- und Treppengeländern, mit mindestens einem von einem ersten Rohrende ausgehenden Kugelkopf mit einer Aussparung in der Kugelfläche und einem Verbindungsglied, welches die Aussparung durchgreift und einerseits in dem Kugelkopf gesichert und andererseits an einem mit dem Kugelkopf zu verbindenden zweiten Rohrende befestigbar ist.

Ein derartiges Verbindungselement ist aus dem US-Patent Nr. 1,467,153, veröffentlicht am 4. September 1923, bekannt.

Weiterhin sind ein Balkongeländer und auch Verbindungselemente für die Rohre eines Balkongeländers aus der DE-OS 37 02 128.1 bekannt. Diese letztgenannten Verbindungselemente. Die bekannten Verbindungselemente haben den Nachteil, daß die Rohre nur unter ganz bestimmten festen relativen Winkeln zueinander an das Verbindungselement anschließbar sind, oder daß die Verbindungsstelle als solche deutlich sichtbar ist, indem beispielsweise zwei miteinander zu verbindende Rohrenden in Laschen übergehen oder an solchen befestigt sind, die dann ihrerseits eine relative Verdrehung zueinander und damit auch eine mehr oder weniger beliebige Winkelstellung der Rohre zueinander ermöglichen.

Die DE-A-36 41 693 offenbart Rohrverbindungselemente, die aus einem Halbkugelkopf mit anschließendem Rohrstück zum Aufstecken und einer Gelenkpfanne von nahezu halbkugeliger Form, ebenfalls mit einem Rohransatz zum Aufstecken auf anschließende Rohrstücke. Das Gelenkpfannenstück weist außerdem einen seitlichen Flansch mit Befestigungsbohrung auf. Diese Verbindungselemente erlauben jedoch nur relativ begrenzte Verschwenkungsmöglichkeiten benachbarter Rohre relativ zueinander.

Vor allen an den Handläufen von Balkongeländern, Lisenen und Treppengeländern sind des öfteren Abknickwinkel erwünscht, die nicht den standardmäßig bevorrateten Winkelkrümmungen von 90° oder 45° entsprechen. Ein Biegen der Rohre oder ein Korrigieren der Standardwinkel von 45° bzw. 90° um wenige Grad in die eine oder andere Richtung kommt aus verschiedenen Gründen nicht in Frage. Zum einen sind die entsprechenden Rohre häufig aus speziellen Legierungen, z. B. einem speziellen gehärteten Aluminium hergestellt, das sich im kalten Zustand nicht biegen läßt, sondern hierzu erwärmt werden muß. Dabei gehen aber die durch eine spezielle Behandlung erzielten Festigkeitseigenschaften verloren, und das Rohr erfüllt damit oftmals nicht mehr die für die Zulassung der Rohre für das betreffende Anwendungsgebiet gestellten Sicherheitsanforderungen. Außerdem sind derartige Rohre schon des gefälligeren Aussehens wegen häufig mit Kunststoff beschichtet, was ein Erwärmen der Rohre von vornherein ausschließt, da dann die Kunststoffbeschichtung erheblich in Mitleidenschaft gezogen würde.

Die bereits erwähnten Verbindungen in Form von Laschen oder dergleichen haben den Nachteil, daß der Rohrverlauf sowohl optisch als auch in seiner Funktion z. B. als Handlauf deutlich unterbrochen ist. Dabei hat man teilweise schon versucht, die Laschen voluminöser und beispielsweise auf ihrer nicht in Eingriff mit der zweiten Lasche tretenden Seite kugelförmig oder auch anders geformt auszugestalten, eine befriedigende Lösung für einen möglichst gleichmäßigen Übergang von einem Rohr zum nächsten ist damit bisher jedoch noch nicht geschaffen worden.

In dem oben genannten US-Patent Nr. 1,467,153 besteht das Verbindungselement aus einem Kugelkopf, der an einem Pfosten oder dergleichen befestigt ist. Der Kugelkopf, dessen Durchmesser den Durchmesser des Pfostens und der damit zu verbindenden Rohre übersteigt, steht damit notwendigerweise aus der Fluchtlinie der Rohre hervor, was aus optischen und praktischen Gründen störend sein kann, weil damit eine sonst glatt durchlaufende Linie eines Geländers oder Handlaufes unterbrochen wird. Dies gilt insbesondere für die Handläufe von Treppengeländern, auf welchen man häufig mit einer Hand entlanggleitet.

Bei dem Verbindungselement nach dem US-Patent Nr. 1,467,153 ist dies praktisch unvermeidlich, wenn man für die relativen Winkel von anzuschließenden Rohrenden einen ausreichenden Spielraum zur Verfügung haben möchte. Wenn nämlich das an den Kugelkopf anzuschließende Rohr nahezu denselben Durchmesser hat wie der Kugelkopf, so umfaßt es auch nahezu die Hälfte der Kugel und läßt damit für ein zweites Rohrende nur einen geringen Spielraum zu. Aus diesem Grund hat bei dem erwähnten US-Patent der Kugelkopf einen deutlich größeren Durchmesser als die von ihm abgehenden Rohrenden. Dennoch sind selbst dort Winkel zwischen abgehenden Rohren von weniger als 90° nur dann möglich, wenn die Rohrenden entsprechend schräg abgeschnitten oder abgefräst werden, was aufwendig ist und zu einem weniger festen Verbund zwischen Rohrende und Kugelkopf führt.

Gegenüber diesem Stand der Technik liegt der vorliegenden Erfindung die Aufgabe zugrunde, ein Verbindungselement für Rohre zu schaffen, bei welchem die Fluchtlinie der miteinander zu verbindenden Rohre durch das Verbindungselement nicht unterbrochen wird und welches außerdem auch ohne Manipulation an den Rohrenden die Verbindung von Rohren unter kleinen Winkeln zuläßt.

Diese Aufgabe wird dadurch gelöst, daß das eingangs beschriebene Verbindungselement einen mit seinem ersten Rohrende verbindbaren zweiten Kugelkopf aufweist, wobei die Kugelköpfe im Abstand voneinander durch ein Brückenglied zusammengehalten werden. Damit ist es möglich, die miteinander zu verbindenden Rohre jeweils an einem der beiden Kugelköpfe anzuschließen, wobei ein großer Winkelbereich zur Verfügung steht, um welchen die beiden angeschlossenen Rohrenden relativ zueinander ausgerichtet werden können. Dies ist selbst dann möglich, wenn der Durchmesser der Kugelköpfe den Durchmesser der Rohre nicht übersteigt.

Gemäß der Erfindung besteht das Verbindungselement also einfach aus zwei sich voneinander weg erstreckenden Kugelköpfen und einem Brückenglied dazwischen. Einer der Kugelköpfe ist dann in der bereits beschriebenen Weise mit dem ersten Rohrende verbunden, so daß sich dann von diesem ersten Rohrende aus über das Brückenglied der zweite Kugelkopf erstreckt, der dann ebenfalls in der bereits beschriebenen Weise mit dem zweiten Kugelkopf verbunden wird.

Dabei hat das Brückenglied zweckmäßigerweise in etwa die Form eines Halbzylinders oder weist in der Nähe der Oberfläche der Kugelköpfe zumindest an einer Seite oder auch umlaufend Einschnürungen gegenüber der Oberfläche des Kugelkopfes auf, damit die Kugelköpfe jeweils mehr als eine Halbkugeloberfläche aufweisen können.

Der Übergang von einem Rohrende zu einem sich von diesem Rohrende aus erstreckenden Kugelkopf kann relativ glatt und optisch gleichmäßig erfolgen. Das zweite freie Rohrende wird dann einfach mit seiner Stirnseite auf den Kugelkopf aufgesetzt und kann hierbei verschiedene Winkelstellungen einnehmen. Das Verbindungsglied ist einerseits in dem Kugelkopf gesichert, durchgreift dessen Oberfläche und tritt nach außen mit dem aufgesetzten zweiten Rohrende in Verbindung, wobei je nach der Ausgestaltung der Aussparung in der Kugeloberfläche oder nach der Art der Verbindung mit dem freien Rohrende verschiedene Winkelstellungen möglich sind.

Dabei versteht es sich, daß die Kugelköpfe keine Vollkugel, sondern jeweils nur etwa eine Halbkugel oder etwas mehr als eine Halbkugel bilden müssen, damit das zweite Rohrende, welches mit seiner Stirnseite eine Halbkugelfläche oder etwas weniger bedeckt, über einen begrenzten Winkelbereich und in gleichmäßigem Eingriff mit der Kugeloberfläche auf dem Kugelkopf verschwenkbar ist.

Bevorzugt ist dabei eine Ausführungsform der Erfindung, bei welcher das zweite Rohrende mit einem Teil, z. B. der Hälfte oder etwas weniger als der Hälfte einer Hohlkugelinnenfläche versehen ist, wobei an dieser Hohlkugelinnenfläche ein Eingriffselement vorgesehen ist, mit welchem das die Aussparung des Kugelkopfes durchgreifende Verbindungsglied verbindbar ist, um das zweite Rohrende an dem Kugelkopf zu sichern.

Es versteht sich, daß der Radius der Hohlkugelinnenfläche dem Außenradius des Kugelkopfes angepaßt sein sollte, um eine möglichst gute Auflage der beiden Flächen aufeinander und einen im wesentlichen glatten Übergang zwischen Kugelkopf und Rohrende zu gewährleisten.

Dabei kann die Hohlkugelinnenfläche zweckmäßigerweise ebenfalls eine Aussparung aufweisen, in oder hinter welcher das erwähnte Eingriffselement angeordnet und gesichert ist. In einer einfachen und bevorzugten Ausführungsform der Erfindung ist das sich durch die Aussparung des Kugelkopfes erstreckende und in dem Kugelkopf gesicherte Verbindungsglied ein Schraubbolzen, der drehfest in dem Kugelkopf aufnehmbar ist, erstreckt sich durch eine in der Hohlkugelinnenfläche des zweiten Rohrendes vorgesehene Aussparung und steht auf der Rückseite dieser Aussparung mit einer entsprechenden Schraubenmutter in Eingriff.

Dabei hat es sich als zweckmäßig erwiesen, wenn entweder die Aussparung im Kugelkopf und/oder die Aussparung in der Hohlkugelinnenfläche schlitzförmig sind. Dies ermöglicht in einfacher Weise ein Verschwenken des Rohrendes gegenüber dem Kugelkopf zusammen mit dem am zweiten Rohrende befestigten Verbindungsglied. Im Falle einer schlitzförmigen Aussparung im Kugelkopf ist dann das Verbindungsglied zusammen mit dem zweiten Rohrende verschwenkbar, im Falle einer schlitzförmigen Aussparung in der Hohlkugelinnenfläche bleibt das Verbindungsglied in einer festen Ausrichtung bezüglich des Kugelkopfes und das Rohr kann gegenüber beiden verschwenkt werden. Auch Kombinationen von beiden Möglichkeiten sind selbstverständlich denkbar.

Im Falle einer näherungsweise halbzylindrischen Ausbildung des Brückengliedes sollte der Radius der zylindrischen Fläche mit dem Radius der Kugelköpfe übereinstimmen und auf dieser Seite bündig in die Kugeloberflächen übergehen, während auf der gegenüberliegenden Seite durch die mehr oder weniger halbzylindrische Ausbildung eine entsprechende Einschnürung des Brückengliedes noch in etwa eine viertel Kugeloberfläche für den Kugelkopf freiläßt, so daß insgesamt ein bündig auf dem Kugelkopf aufsitzendes Rohrende um etwa 90° auf der Oberfläche des Kugelkopfes verschwenkt werden kann. Da zwei entsprechende Kugelköpfe vorgesehen sind, können die daran befestigten Rohrenden relativ zueinander insgesamt um etwa 180° gegeneinander verschwenkt werden, ohne den bündigen Kontakt mit der Kugeloberfläche zu verlieren. Dementsprechend sollten sich auch die Aussparungen bzw. Schlitze in den Oberflächen der Kugelköpfe und/oder in den Kugelinnenflächen der Rohrenden über einen Winkelbereich von jeweils etwa 90° oder etwas mehr erstrecken.

Besonders bevorzugt ist eine Ausführungsform der Erfindung, bei welcher das Verbindungselement zweiteilig ist, wobei die beiden Teile vorzugsweise im wesentlichen entlang einer Ebene voneinander trennbar sind, die parallel zu der Achse der Rohrenden liegt, vorzugsweise durch die Achse der Rohrebenen aufgespannt wird. Dabei sollten die schlitzförmigen Aussparungen ebenfalls in bzw. parallel zu dieser Trennungsebene verlaufen. Ganz besonders zweckmäßig ist es dabei, wenn die beiden Teile eine jeweils identische Form haben und zusammengesetzt zwei Kugelköpfe mit einem Brückenglied ergeben, wobei die Trennungsebene beide Kugelköpfe und auch das Brückenglied der Länge nach symmetrisch teilt.

Die beiden Hälften werden zweckmäßigerweise durch Schraubbolzen zusammengehalten, wobei es günstig ist, wenn die Schraubbolzen versenkbare Köpfe haben bzw. Aussparungen entweder in den Kugelköpfen oder in dem Brückenglied vorgesehen sind, durch welche die Schraubbolzen hindurchgesteckt werden können und die eine zusätzliche Aufnahmeaussparung für den Kopf des Schraubbolzens haben, so daß dieser nicht über die Oberfläche des Verbindungselementes hervorsteht.

Weiterhin hat es sich als zweckmäßig erwiesen, wenn mindestens eines der beiden Rohrenden, vorzugsweise beide, als kurze Rohrstutzen, gegebenenfalls mit einem abgestuften Ansatz ausgebildet sind, so daß anschließende Rohre unmittelbar und in axialer Richtung auf diese Stutzen aufsteckbar sind.

Bevorzugt ist außerdem eine Ausführungsform der Erfindung, bei welcher das Verbindungselement zumindest überwiegend aus Aluminiumdruckguß hergestellt und nach Möglichkeit auch in gleicher Weise wie die Rohre und/oder Rohrstutzen mit Kunststoff beschichtet ist. Dies trägt zu einem gefälligen und gleichmäßigen optischen Äußeren bei.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren. Es zeigen:
Fig. 1 eine Explosionsdarstellung einer bevorzugten Ausführungsform eines Verbindungselementes mit einem auf einer Seite anschließenden Rohrstutzen,
Fig.2 eine perspektivische Ansicht des Verbindungselementes nach Fig. 1 mit zwei an jeweils einem Kugelkopf befestigten Rohrstutzen und
Fig.3 eine ähnliche Ausführungsform eines Verbindungselementes mit zwei Rohrstutzen unter einem anderen Blickwinkel als Fig. 2.

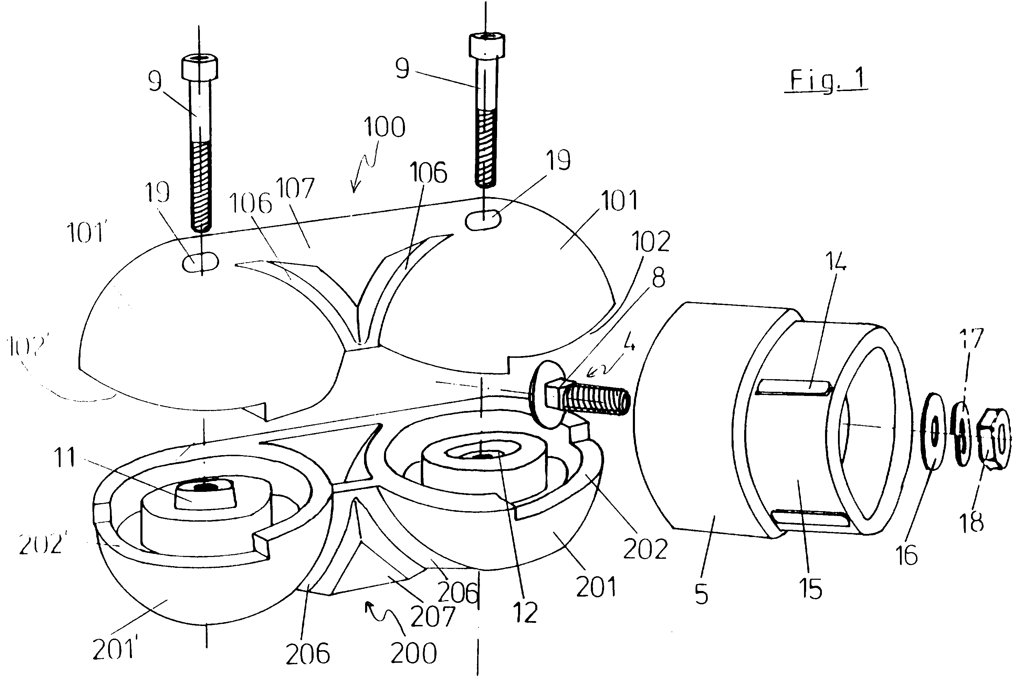

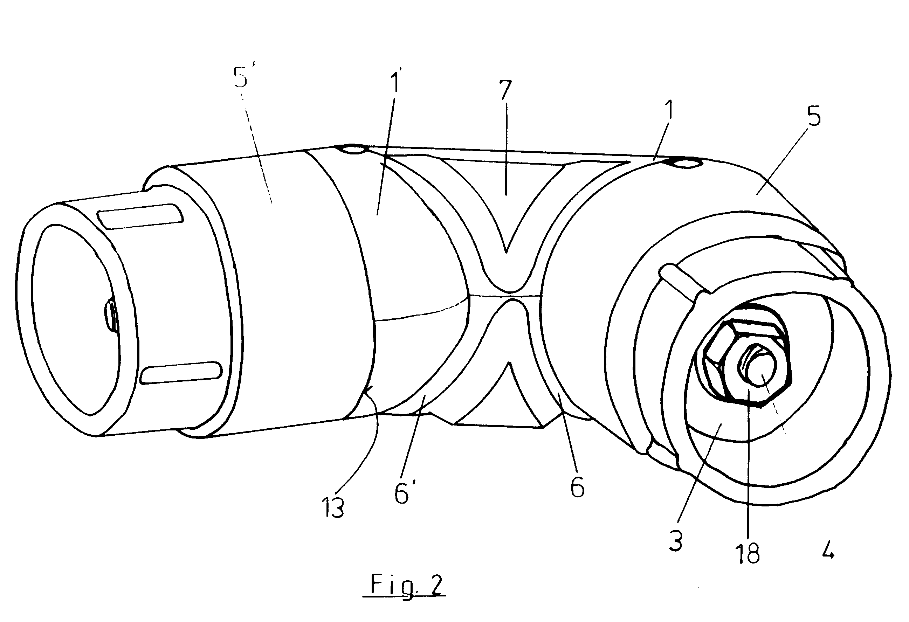

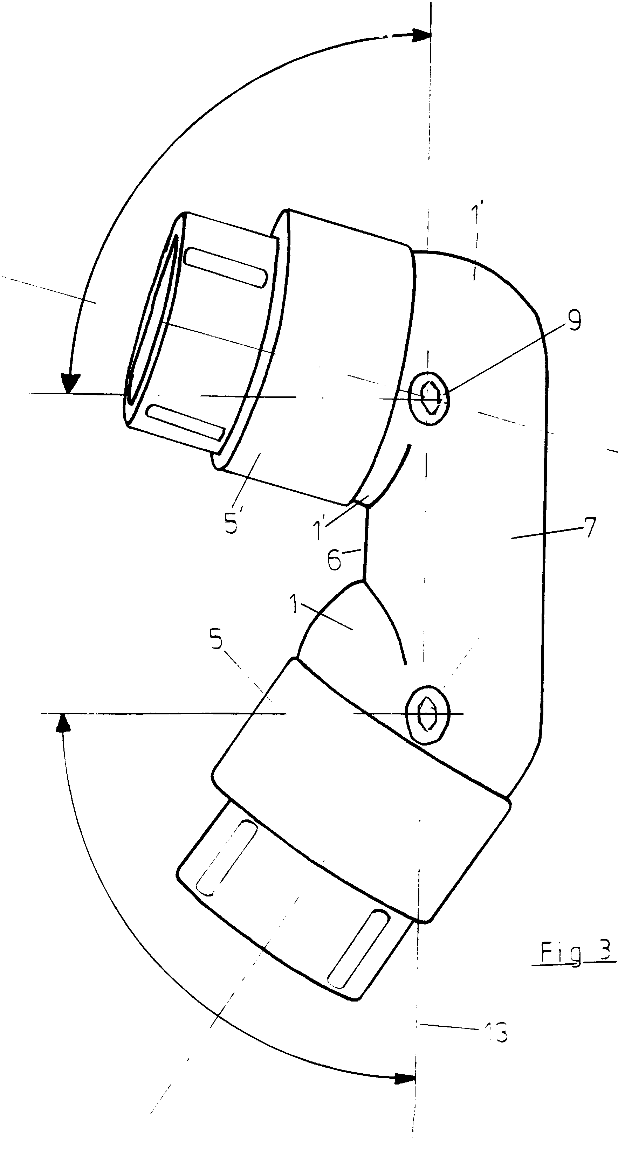

In Fig. 1 sind die Bezugszahlen der einzelnen Teilelemente des Verbindungselementes gegenüber den Fig. 2 und 3 jeweils um 100 bzw. 200 erhöht, um die entsprechenden Tellelemente an der oberen Hälfte 100 und an der unteren Hälfte 200 des Verbindungselementes zu unterscheiden. Soweit jedoch Teile nur einzeln auftauchen oder eine Unterscheidung nicht erforderlich ist, sind sie mit entsprechend um 100 bzw. 200 niedrigeren Bezugszahlen bezeichnet. Man erkennt In Fig. 1 die obere Hälfte 100 des Verbindungselementes, welche aus Kugelkopfteilen 101 und 101' besteht, welche durch ein Brückenglied 107 miteinander verbunden sind. In entsprechender Weise besteht die untere Hälfte 200 aus Kugelkopfteilen 201, 201' und dem sie verbindenden Brückenglied 207. Im zusammengesetzten Zustand bilden diese obere Hälfte 100 und die untere Hälfte 200 ein Verbindungselement, das aus zwei Kugelköpfen 1, 1' und dem sie verbindenden Brückenglied 7 besteht, wobei die Kugelköpfe jeweils eine Aussparung 2 bzw. 2' aufweisen, die nach dem Zusammensetzen der Hälften 100, 200 von den Aussparungsteilen 102, 202 bzw. 102', 202' gebildet werden.

Beide Hälften 100, 200 sind Hohlteile aus Aluminiumdruckguß. Dabei sind die Kugelkopfteile 101, 101' und 201 bzw. 201' jeweils in etwa Halbkugeln, die auf einer Seite bündig in die teilzylindrische Oberfläche der Brückenglieder 107 bzw. 207 übergehen. Auf der dem Betrachte zugewandten Seite in Fig. 1 und auch in Fig. 2 erkennt man, daß das Brückenglied 7 nicht exakt halbzylindrisch ist, sondem eher die Form eines auf einer Seite teilweise weggeschnittenen Vollzyllnders hat. Die der zylindrischen Teilfläche des Brückengliedes 7 gegenüberliegende Seite ist jedoch so weit weggeschnitten und hat außerdem zusätzliche Aussparungen 106, 106' und 206 bzw. 206', daß die Rohrenden 5, 5' in der durch die Aussparungen 2, 2' definierten Ebene um etwa 90° verschwenkbar sind, wobei die freie Kante bzw. der innenliegende Rand 13 der Rohrenden auf dieser Innenseite des Verbindungselementes in die Aussparungen 6 bzw. 6' hinein bewegt werden können, die im zusammengesetzten Zustand von den Aussparungen 106, 206, 106', 206' gebildet werden.

Die Schloßschraube 4 weist unterhalb ihres Kopfes einen Vierkant 8 auf, der so bemessen ist, daß er mit leichter Spielpassung in der schlitzförmigen Aussparung 2 gleiten kann, jedoch gleichzeitig drehfest in dieser Aussparung 2 gehalten wird, so daß sich die Schraube 4 nicht dreht, wenn die Mutter 18 auf das Schraubenende aufgeschraubt wird. Der Kopf der Schloßschraube 4 befindet sich im zusammenmontierten Zustand der beiden Hälften 100, 200 im Inneren des Kugelkopfes 1; der Vierkant 8 unterhalb des Kopfes liegt, wie bereits erwähnt, zwischen den gegenüberliegenden Flächen der schlitzförmigen Aussparung 2, und das mit einem Gewinde versehene Ende der Schloßschraube 4 erstreckt sich aus dieser Aussparung 2 heraus und auch durch eine (in den Figuren nicht sichtbare) Bohrung einer hohlkugelförmigen Innenfläche im Inneren des Rohrendes 5 hindurch, die eine entsprechende Aussparung aufweist. Auf dieses auf der Rückseite der Hohlkugelfläche herausragende Ende der Schraube 4 werden dann der Reihe nach eine Unterlegscheibe 16 und ein Sprengring 17 aufgelegt, und anschließend wird die Mutter 18 auf das Ende der Schloßschraube 4 aufgeschraubt, wie man auch in Fig. 2 erkennen kann. In Fig. 2 sieht man auf der rechten Seite auch die Rückseite der Hohlkugelfläche 3, deren Innenradius mit dem Außenradius der Kugelköpfe 1, 1' übereinstimmt.

Die beiden Hälften 100, 200 des Verbindungselementes werden durch zwei Schrauben 9, 9' mit Innensechskantkopf zusammengehalten, wobei die Schraubenköpfe in Aussparungen 19, 19' der oberen Kugelkopfteile 101, 101' aufgenommen sind, so daß die Schraubenköpfe nicht über die Oberfläche der Kugelköpfe 1, 1' hinausragen. Im Inneren weisen die Kugelkopfteile 101, 201, 101' und 201' paarweise entweder einen Zapfen 11 oder ein Buchsenteil 12 auf, die passend ineinandersetzbar sind. In der oberen Hälfte 100 befindet sich der in diesem Fall nicht sichtbare Zapfen 11 in dem Kugelkopfteil 101 und entsprechend das Buchsenteil 12 in dem Kugelkopfteil 101', während umgekehrt in der unteren Hälfte der Zapfen 11 links in dem Kugelkopfteil 201' angeordnet ist und das Buchsenteil 12 sich rechts in dem Kugelkopfteil 201 befindet Die beiden Hälften 100, 200 erhalten so beim Zusammensetzen eine sichere Führung und können außerdem als praktisch identische Teile hergestellt und gegossen werden, wobei lediglich die Gewinde in dem Zapfenteil 11 und dem Buchsenteil 12 in der oberen Hälfte gegebenenfalls auszubohren sind oder aber entsprechende Muttem in Fassungen in dem Zapfenteil 11 und dem Buchsenteil 12 axial gesichert eingesetzt werden.

Wie man aus Fig. 1 in Verbindung mit den Fig. 2 und 3 leicht erkennen kann, spannen die Aussparungen 102, 102' eine Ebene auf, in welcher sich auch die Achse der Schraube 4 und der entsprechenden nicht dargestellten Schraube 4' erstreckt, wobei diese Achse auch mit der Achse der Rohrenden 5 übereinstimmt, wenn eine entsprechende Durchgangsbohrung in der Kugelinnenfläche 3 im Ende des Rohrstutzens 5 zentral gebohrt ist.

Das Rohrende 5 ist außerdem abgestuft mit einem Ansatz 15 von kleinerem Durchmesser versehen, der noch Halte- und Zentrierrippen 14 aufweist. Das Vorsehen derartiger Rohrstutzen 5 hat den Vorteil, daß die dem Kugelkopf 1 abgewandte Seite des Hohlkugeleinsatzes 3 von der Rückseite her leicht zugänglich ist und so in einfacher Weise die Verschraubung zwischen der Mutter 18 und dem Schraubbolzen bzw. der Schloßschraube 4 von der offenen Rückseite des Rohrstutzens her stattfinden kann. Selbstverständlich wäre auch eine Teilung des Verbindungselementes zwischen den beiden Kugelköpfen 1,1' derart denkbar, daß beispielsweise von der Seite des hohlen, halbzylindrischen Teiles aus ein entsprechender Schraubenkopf oder eine Mutter oder ein anderes Verbindungselement zugänglich wäre, um die Befestigung zwischen einem Rohrende und einem Kugelkopf vornehmen zu können. Bei der hier dargestellten bevorzugten Ausführungsform können jedoch die kurzen Rohrstutzen relativ einfach und schnell an den Kugelköpfen befestigt und in einer gewünschten Winkelposition durch Festziehen der Schraubenmutter 18 fixiert werden, und danach werden die sich anschließenden (nicht dargestellten) längeren Rohre auf den Ansatz 15 aufgesteckt, wobei die Rippen 14 für einen sicheren Reibeingriff mit den aufgesteckten Rohren sorgen; erforderlichenfalls können sie vernietet werden. Wie man auch aus Fig. 2 leicht erkennen kann, ergibt sich dann zumindest in der Seitenansicht (noch besser von der gegenüberliegenden Seite her) der Eindruck eines mit konstantem Durchmesser durchlaufenden, ein- oder zweimal abgeknickten Rohres, da sowohl die auf den Ansatz 15 aufzusteckenden Rohre als auch der Rohrstutzen 5 bzw. 5', die Kugelköpfe 1, 1' und auch das halbzylindrische Brückenglied (letzteres zumindest auf der zylindrisch ausgebildeten Seite) jeweils den gleichen Krümmungsradius haben. Auch in der Draufsicht von oben, d. h. mit Blickrichtung senkrecht zu der Ebene, in welcher die beiden Rohrenden verschwenkt werden können, ergibt sich im wesentlichen ein relativ konstanter und glatter Verlauf der Außenkonturen der Rohrenden und des Verbindungselementes. Bei der in Fig.3 dargestellten Ausführungsform sind die Aussparungen 6, 6' unmittelbar miteinander zu einer einzigen Aussparung 6 verbunden, ohne daß noch irgendein Wulst oder eine Erhebung dazwischen verbleibt, wobei das Brückenglied 7 rechts von der Achse 13 exakt halbzylindrisch ausgebildet ist und links davon nicht eben sondern nur etwas abgeflacht mit einem größeren bzw variierenden Krümmungsradius versehen sein kann, so daß sich hier zwischen den beiden Kugelköpfen 1, 1' eine Einschnürung 6 ergibt, die einen zusätzlichen Teilabschnitt des Kugelkopfes 1, 1' freigibt und damit das Verschwenken der Rohrenden auch über diesen Kugelbereich hinweg ermöglicht.

Es versteht sich, daß das Verbindungselement nicht notwendigerweise zwei Kugelköpfe aufweisen muß, sondern daß beispielsweise das mehr oder weniger halbzylindrische Brückenglied 7 unmittelbar in ein Rohrende übergehen und auf der anderen Seite für die Verbindung mit einem weiteren Rohrende den Kugelkopf 1 aufweisen kann.

Die Erfindung ist für die verschiedensten mechanischen Rohrkonstruktionen verwendbar, wobei die Handläufe von Balkon- und Treppengeländern nur zwei praktische Beispiele sind, das Verbindungselement jedoch auch an beliebigen anderen Rohrkonstruktionen eingesetzt werden kann.

Vor allem bietet das Brückenglied 7 in der bevorzugten Ausführungsform auch eine Ansatz- bzw. Angriffsfläche beispielsweise für ein Stützelement, es kann auch in etwa T-förmig mit einem weiteren Rohrstutzen für den Abgang eines dritten Rohres versehen werden. Das Verbindungselement kann weiterhin verwendet werden für Rohrrahmenkonstruktionen, z. B. Gerüste oder Gitterkonstruktionen z. B. für Dekorationszwecke, Verkaufsstände etc.

## Patentansprüche

1. Verbindungselement für Rohre, insbesondere für Handläufe an Balkon- und Treppengeländern, **mit** mindestens einem von einem ersten Rohrende ausgehenden Kugelkopf (1) mit einer Aussparung (102,102') in der Kugelfläche und einem Verbindungsglied (4), welches die Aussparung (102,102') durchgreift und einerseits in dem Kugelkopf (1) gesichert und andererseits an einem mit dem Kugelkopf (1) zu verbindenden zweiten Rohrende (5) befestigbar ist, **dadurch gekennzeichnet,** daß das Verbindungselement einen mit dem ersten Rohrende (5') verbindbaren zweiten Kugelkopf (1') aufweist, wobei die Kugelköpfe (1, 1') im Abstand voneinander durch ein Brückenglied (7) zusammengehalten werden.

2. Verbindungselement nach Anspruch 1, **dadurch gekennzeichnet,** daß der Kugelkopf (1) mindestens teilweise in dem Rohrende (5) aufnehmbar ist.

3. Verbindungselement nach Anspruch 1 oder 2, **dadurch gekennzeichnet,** daß das zweite Rohrende in seinem Inneren mit mindestens einem Teil einer Hohlkugelinnenfläche (3) versehen ist, an welcher ein Eingriffselement (18) für das Verbindungsglied (4) vorgesehen ist.

4. Verbindungselement nach einem der Ansprüche 1 bis 3, **dadurch gekennzeichnet,** daß die Aussparung (2) schlitzförmig ist.

5. Verbindungselement nach einem der Ansprüche 1 bis 4, **dadurch gekennzeichnet,** daß die Hohlkugelinnenfläche (3) eine Aussparung für den Durchgriff des Verbindungselementes (4) aufweist.

6. Verbindungselement nach einem der Ansprüche 1 bis 5, **dadurch gekennzeichnet,** daß das Verbindungsglied ein Schraubbolzen (4) ist, der drehfest in den Kugelkopf (1) aufnehmbar ist.

7. Verbindungselement nach einem der Ansprüche 1 bis 6, **dadurch gekennzeichnet,** daß das Brückenglied (7) näherungsweise die Form eines Halbzylinders hat.

8. Verbindungselement nach Anspruch 7, **dadurch gekennzeichnet,** daß der Radius der Zylinderoberfläche dem Radius der Kugelköpfe entspricht und daß die zylindrische Fläche des Halbzylinders bündig in die Kugelkopfoberflächen übergeht.

9. Verbindungselement nach einem der Ansprüche 1 bis 8, **dadurch gekennzeichnet,** daß es zweiteilig ausgebildet ist, wobei die beiden Teile vorzugsweise entlang einer Ebene voneinander trennbar sind, die parallel zu der von den Achsen der Rohrenden aufgespannten Ebene liegt.

10. Verbindungselement nach Anspruch 9, **dadurch gekennzeichnet,** daß die schlitzförmige Aussparung ebenfalls im wesentlichen entlang der Trennungsebene verläuft.

11. Verbindungselement nach Anspruch 9 oder 10, **dadurch gekennzeichnet,** daß die beiden Hälften (100, 200) durch vorzugsweise in der Oberfläche versenkbare Schraubbolzen (9, 9') zusammengehalten werden.

12. Verbindungselement nach Anspruch 5 und einem der übrigen Ansprüche, **dadurch gekennzeichnet,** daß die Aussparung in der Hohlkugelinnenfläche (3) schlitzförmig ist.

13. Verbindungselement nach einem der Ansprüche 1 bis 12, **dadurch gekennzeichnet,** daß das erste und/oder das zweite Rohrende (5, 5') als kurze Rohrstutzen ausgebildet sind, welche jeweils mit einem weiteren Rohr zusammensteckbar sind.

14. Verbindungselement nach einem der Ansprüche 1 bis 13, **dadurch gekennzeichnet,** daß es als Aluminiumdruckgußteil hergestellt ist.

15. Verbindungselement nach einem der Ansprüche 1 bis 14, **dadurch gekennzeichnet,** daß es mit Kunststoff beschichtet oder eloxiert ist.

## Claims

1. A connecting element for tubes, in particular for handrails on balcony and staircase banisters, comprising at least one ball head (1) extending from a first tube end and having an opening (102, 102') in the ball surface and a connecting member (4) which engages through the opening (102, 102') and which on the one hand is secured in the ball head (1) and on the other hand can be fixed to a second tube end (5) to be connected to the ball head (1), characterised in that the connecting element has a second ball head (1') which can be connected to the first tube end (5'), wherein the ball heads (1, 1') are held together at a spacing from each other by a bridge member (7).

2. A connecting element according to claim 1 characterised in that the ball head (1) can be at least partially received in the tube end (5).

3. A connecting element according to claim 1 or claim 2 characterised in that in its interior the second tube end is provided with at least a part of a hollow ball inside surface (3) on which an engagement element (18) for the connecting member (4) is provided.

4. A connecting element according to one of claims 1 to 3 characterised in that the opening (2) is in a slit form.

5. A connecting element according to one of claims 1 to 4 characterised in that the hollow ball inside surface (3) has an opening for the connecting element (4) to pass therethrough.

6. A connecting element according to one of claims 1 to 5 characterised in that the connecting member is a screw bolt (4) which can be non-rotatably received in the ball head (1).

7. A connecting element according to one of claims 1 to 6 characterised in that the bridge member (7) is approximately in the form of a semicylinder.

8. A connecting element according to claim 7 characterised in that the radius of the surface of the cylinder corresponds to the radius of the ball heads and that the cylindrical surface of the semicylinder blends flush into the ball head surfaces.

9. A connecting element according to one of claims 1 to 8 characterised in that it is of a two-part configuration, wherein the two parts can preferably be separated from each other along a plane which is parallel to the plane spanned by the axes of the tube ends.

10. A connecting element according to claim 9 characterised in that the slit-form opening also extends substantially along the separation plane.

11. A connecting element according to claim 9 or claim 10 characterised in that the two halves (100, 200) are held together by screw bolts (9, 9') which can preferably be sunk in the surface.

12. A connecting element according to claim 5 and one of the other claims characterised in that the opening in the hollow ball inside surface (3) is in slit form.

13. A connecting element according to one of claims 1 to 12 characterised in that the first and/or the second tube end (5, 5') are in the form of short tube connecting portions which can each be fitted together with a further tube.

14. A connecting element according to one of claims 1 to 13 characterised in that it is produced in the form of an aluminium die casting.

15. A connecting element according to one of claims 1 to 14 characterised in that it is coated with plastics material or anodised.

## Revendications

1. Elément de raccordement pour tuyaux, en particulier pour les mains courantes des rampes d'escalier et des garde-fous de balcons, comportant au moins une tête sphérique (1), qui part d'une première extrémité du tuyau, et qui comporte un évidement (102, 102') dans la surface sphérique, et un organe de raccordement (4), qui pénètre dans l'évidement (102, 102'), et qui d'une part est assujetti dans la tête sphérique (1) et d'autre part peut être fixé à une deuxième extrémité de tuyau (5), qui doit être raccordée à la tête sphérique (1), caractérisé en ce que l'élément de raccordement comporte une deuxième tête sphérique (1'), pouvant être raccordée à la première extrémité de tuyau (5'), les têtes sphériques (1, 1') étant maintenues à distance l'une de l'autre par un organe en pont (7).

2. Elément de raccordement selon la revendication 1, caractérisé en ce que la tête sphérique (1) peut être au moins partiellement logée dans l'extrémité de tuyau (5).

3. Elément de raccordement selon la revendication 1 ou 2, caractérisé en ce que la deuxième extrémité du tuyau est, dans son volume intérieur, pourvue d'au moins une partie d'une surface intérieure (3) de sphère creuse, contre laquelle est prévu un élément de prise (18) pour l'organe de raccordement (4).

4. Elément de raccordement selon l'une des revendications 1 à 3, caractérisé en ce que l'évidement (2) a la forme d'une fente.

5. Elément de raccordement selon l'une des revendications 1 à 4, caractérisé en ce que la surface intérieure de sphère creuse (3) comporte un évidement pour permettre la pénétration de l'élément de raccordement (4).

6. Elément de raccordement selon l'une des revendications 1 à 5, caractérisé en ce que l'organe de raccordement est un boulon fileté (4), qui est logé dans la tête sphérique (1) d'une manière fixe en rotation.

7. Elément de raccordement selon l'une des revendications 1 à 6, caractérisé en ce que l'organe en pont (7) a approximativement la forme d'un demi-cylindre.

8. Elément de raccordement selon la revendication 7, caractérisé en ce que le rayon de la surface du cylindre correspond au rayon des têtes sphériques, et que la surface cylindrique du demi cylindre se poursuit en affleurement par les surfaces de la tête sphérique.

9. Elément de raccordement selon l'une des revendications 1 à 8, caractérisé en ce qu'il est formé de deux parties, les deux parties pouvant de préférence être séparées l'une de l'autre le long d'un plan qui est parallèle au plan par lequel passent les axes des extrémités du tuyau.

10. Elément de raccordement selon la revendication 9, caractérisé en ce que l'évidement en forme de fente court lui aussi essentiellement le long du plan de séparation.

11. Elément de raccordement selon la revendication 9 ou 10, caractérisé en ce que les deux moitiés (100, 200) sont maintenues l'une contre l'autre par des boulons filetés (9, 9') de préférence pouvant être noyés dans la surface.

12. Elément de raccordement selon la revendication 5 et l'une des autres revendications, caractérisé en ce que l'évidement aménagé dans la surface intérieure de sphère creuse (3) a la forme d'une fente.

13. Elément de raccordement selon l'une des revendications 1 à 12, caractérisé en ce que la première et/ou la deuxième extrémités de tuyau (5, 5') sont configurées comme de petites tubulures, dont chacune peut recevoir en emboîtement un tuyau supplémentaire.

14. Elément de raccordement selon l'une des revendications 1 à 13, caractérisé en ce qu'il est fabriqué sous forme d'une pièce en aluminium coulée sous pression.

15. Elément de raccordement selon l'une des revendications 1 à 14, caractérisé en ce qu'il est enduit de plastique ou anodisé.
